# EUROPEAN PATENT SPECIFICATION

(11) **EP 3 538 392 B1**
(45) Date of publication and mention of the grant of the patent: **31.01.2024**
(21) Application number: 17823314.4
(22) Date of filing: 13.12.2017
(51) Int. Cl.: B60K 17/28, B60K 25/02, B60K 25/06, F16B 5/02, F16J 15/02, F16H 57/029

(54) **MOUNTING SEAL FOR POWER TAKE OFF**
MONTAGEDICHTUNG FÜR ZAPFWELLE
JOINT DE MONTAGE POUR PRISE DE FORCE

(30) Priority: 17.12.2016 US 201662435731 P
(43) Date of publication of application: 18.09.2019
(73) Proprietor: Parker-Hannifin Corporation, Cleveland, Ohio 44124 (US)
(72) Inventor: BORDWELL, Mark, A., Cleveland, OH 44124 (US); BLALOCK, James, H., Cleveland, OH 44124 (US)
(74) Representative: Murgitroyd & Company
(86) International application number: PCT/US2017/065989
(87) International publication number: WO 2018/111984

(56) References cited:
- WO-A2-2011/044376
- GB-A- 2 153 763
- US-A- 3 540 297
- US-A1- 2008 141 799
- US-A1- 2008 191 474
- US-B1- 6 224 289

## Description

### BACKGROUND OF THE INVENTION

This invention relates in general to sealing structures for mechanical devices. In particular, this invention relates to an improved structure for providing a seal between a housing of a power take off and a housing of a source of rotational energy upon which the power take off is supported.

A power take off is a well known mechanical device that is often used in conjunction with a source of rotational energy, such as a vehicle engine or transmission, to provide rotational energy to a rotatably driven accessory, such as a hydraulic pump that is supported on the vehicle. For example, power take offs are commonly used on industrial and agricultural vehicles to provide rotational energy to rotatably driven hydraulic pumps that, in turn, are used to operate hydraulically driven devices, such as plows, trash compactors, lifting mechanisms, winches, and the like. The power take off provides a simple, inexpensive, and convenient means for supplying energy from the source of rotational energy to the rotatably driven hydraulic pump.

A typical power take off includes a housing, an input mechanism, and an output mechanism. The power take off housing is adapted to be supported on a housing of the source of rotational energy. The power take off housing includes an opening that can be aligned with an opening provided in the housing of the source of rotational energy. The input mechanism of the power take off extends outwardly from the power take off housing through the aligned openings and into the housing of the source of rotational energy. In this manner, the input mechanism of the power take off is connected to the source of rotational energy so as to be rotatably driven whenever the source of rotational energy is operated. The output mechanism of the power take off is rotatably driven by the input mechanism and is adapted to be connected to the rotatably driven accessory. In some instances, the input mechanism of the power take off is directly connected to the output mechanism such that the rotatably driven accessory is operated whenever the source of rotational energy is operated. In other instances, a clutch assembly is provided between the input mechanism and the output mechanism such that the rotatably driven accessory is operated only when the clutch assembly is engaged while the source of rotational energy is operated.

As mentioned above, the housing of the power take off is adapted to be secured to the housing of the source of rotational energy. It is important that a fluid-tight seal be provided between the housing of the power take off and the housing of the source of rotational energy. In the past, paper and metal gaskets have been provided between the housing of the power take off and the housing of the source of rotational energy for this purpose. These gaskets are often provided to a customer in varying thicknesses so that a proper backlash can be set between the transmission drive gear and the power take off input gear relatively quickly and easily. Because of tolerance stack-up of the components of the transmission and power take off, the proper distance between the two gears can fluctuate, and gaskets of different thicknesses are used to compensate for such fluctuation.

Paper gaskets are an economical means to set a desirable amount of backlash between mating gears of the power take off and the source of rotational energy (such as a transmission). When a power take off is mounted on a source of rotational energy, the amount of backlash between mating gears of the power take off and the source of rotational energy must be checked. If the amount of backlash is not correct, the power take off must be removed from the transmission to allow the size of the gasket stack to be adjusted, the power take off to be re-mounted on the transmission, and the amount of the backlash to be re-checked. Metal gaskets with molded rubber edges have been used in some applications, but this introduces an additional set of tolerances that must be managed. This can require surface grinding, and metal gaskets can be relatively expensive.

Transmission manufacturers recently have been improving component tolerances and are also requesting better power take off tolerances and sealing methods. Thus, it would be desirable to provide an improved structure for providing a seal between a housing of a power take off and a housing of a source of rotational energy upon which the power take off is supported that addresses the issues noted above.

US Patent Publication no. US-2008/0141799A1 discloses a firefighting pump transmission for use with an emergency vehicle pump comprising a power take off gear affixed to a drive shaft of the transmission and an impeller clutch driving gear affixed to the drive shaft adjacent the power take off gear. The clutch driving gear may couple with a multi-disk clutch to turn an impeller shaft. The transmission allows for changing the gearing of the power take off without affecting the ratio or speeds of the impeller driving mechanism, and vice versa. The dual gears on the drive shaft accommodate compatibility with a commercially available power take off device to be mounted to the housing of the transmission to power a variety of devices.

International Patent Publication no. WO-2011/044376A2 discloses a power take off. An idler shaft holds a pick-up gear for connecting the power take off to a transmission, and includes a splined shaft. The pick-up gear and an idler gear are mounted on the splined shaft in different configurations. An output of the power take off, including a splined output and an output plate for connecting to secondary equipment such as a hydraulic pump, can be replaced or reconfigured to work with different configurations of secondary equipment. The power take off includes a housing having an external air shift unit supported thereon. The external air shift unit includes a surface that is supported on the housing of the power take off, and that surface includes a groove that receives an O-ring that seals the connection between the air shift unit and the housing.

### SUMMARY OF THE INVENTION

This invention relates to an improved structure for providing a seal between a housing of a power take off and a housing of a source of rotational energy upon which the power take off is supported.

According to an aspect of the present invention, there is provided a power take off as claimed in claim 1.

Optional further features of the power take off are defined in the dependent claims.

According to another aspect of the present invention, there is provided a combined assembly of a source of rotational energy and a power take off as claimed in claim 8.

Optional further features of the combined assembly are defined in the dependent claims.

Various features of this invention will become apparent to those skilled in the art from the following detailed description of the preferred embodiments, when read in light of the accompanying drawings.

### BRIEF DESCRIPTION OF THE DRAWINGS

Fig. 1 is a sectional elevational view of a power take off including an improved structure for providing a seal in accordance with this invention between a housing of the power take off and a housing of a source of rotational energy upon which the power take off is supported.
Fig. 2 is a bottom plan view of the housing of the power take off illustrated in Fig. 1.
Fig. 3 is an enlarged sectional elevational view taken along line 3-3 of Fig. 2.
Fig. 4 is a further enlarged sectional elevational view of portion X of Fig. 3.

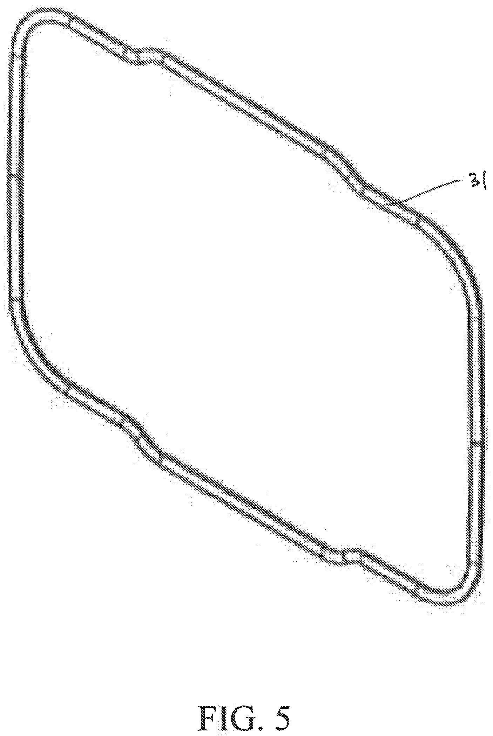

Fig. 5 is a perspective view of a first embodiment of an O-ring shown in Figs. 2, 3, and 4.
Fig. 6 is an enlarged elevational view of the first embodiment of the O-ring illustrated in Fig. 5.
Fig. 7 is a further enlarged sectional elevational view taken along line 7-7 of Fig. 6.
Fig. 8 is an enlarged elevational view of a second embodiment of the O-ring illustrated in Fig. 5.
Fig. 9 is a further enlarged sectional elevational view taken along line 9-9 of Fig. 8.
Fig. 10 is a sectional elevational view of a power take off including an improved structure for providing a seal in accordance with this invention between a housing of the power take off and an adaptor supported on a housing of a source of rotational energy and upon which the power take off is supported.

### DETAILED DESCRIPTION OF THE PREFERRED EMBODIMENTS

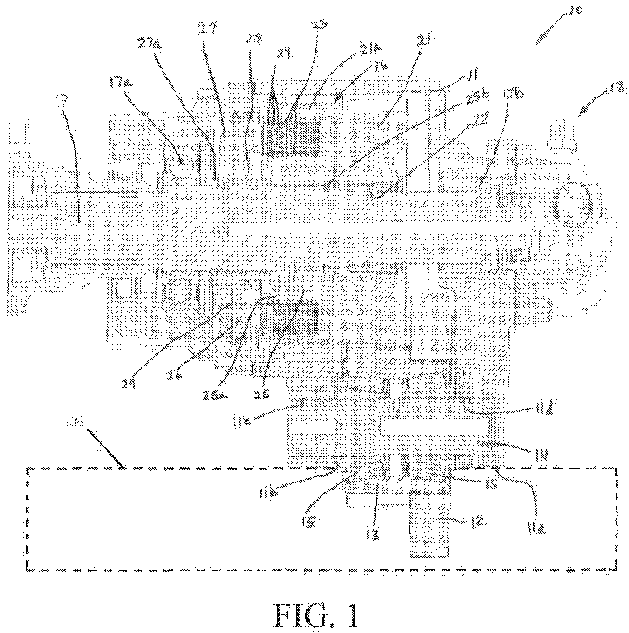

Referring now to the drawings, there is illustrated in Fig. 1 a sectional elevational view of a power take off, indicated generally at 10, in accordance with this invention. The basic structure and mode of operation of the power take off 10 are well known in the art, and only those portions of the power take off 10 that are necessary for a complete understanding of the invention will be described. Also, the illustrated power take off 10 is intended merely to illustrate one environment in which this invention may be used. Thus, the scope of this invention is not intended to be limited for use with the specific structure for the power take off 10 illustrated in Fig. 1 or with power take offs in general. On the contrary, as will become apparent below, this invention may be used in any desired environment for the purposes described below.

The illustrated power take off 10 includes a hollow housing 11 having a mounting surface 11a provided thereon. An opening 11b is provided through the mounting surface 11a of the power take off housing 11. An input gear 12 is rotatably supported within the power take off housing 11 and includes a portion that extends outwardly through the opening 11b provided through the mounting surface 11a.

The mounting surface 11a of the power take off housing 11 is adapted to be secured (typically by a plurality of bolts) to a corresponding mounting surface (not shown) provided on a source of rotational energy 10a, such as an engine or a transmission of a vehicle. As is well known in the art, the portion of the input gear 12 that extends through the opening 11b of the power take off housing 11 is adapted to extend within a portion of the source of rotational energy 10a and engage a corresponding gear (not shown) or other mechanism provided therein. Thus, the input gear 12 of the power take off 10 is rotatably driven whenever the corresponding gear contained within the source of rotational energy 10a is rotatably driven.

The illustrated input gear 12 is splined onto or otherwise supported on an input gear hub 13 for concurrent rotation to form an input cluster gear. However, it is known to form the input gear 12 and the input gear hub 13 integrally from a single piece of material. In either event, the input gear hub 13 is, in turn, rotatably supported on an input shaft 14 by a pair of roller bearings 15. First and second ends of the illustrated input shaft 14 are respectively (and non-rotatably) supported in first and second bores 11c and 11d provided in the power take off housing 11.

The power take off 10 also includes a clutch assembly, indicated generally at 16, for selectively the connecting the input gear hub 13 to an output shaft 17. The output shaft 17 is, in turn, adapted to be connected to the rotatably driven accessory (not shown). The illustrated output shaft 17 is rotatably supported on the power take off housing 11 by a pair of bearings 17a and 17b or other similar means. When the clutch assembly 16 is engaged, the input gear hub 13 is connected to the output shaft 17 for concurrent rotation. Thus, the rotatably driven accessory is rotatably driven by the source of rotational power 10a when the clutch assembly 16 is engaged. Conversely, when the clutch assembly 16 is disengaged, the input gear hub 13 is disconnected from the output shaft 17. Thus, the rotatably driven accessory is not rotatably driven by the source of rotational power 10a when the clutch assembly 16 is disengaged. A conventional shifter assembly, indicated generally at 18, may be provided to selectively engage and disengage the clutch assembly 16 in a known manner. It will be appreciated, however, that the clutch assembly 16 and shifter assembly 18 may be embodied otherwise than as specifically described and illustrated, and further that this invention may be practiced with the output shaft 17 being constantly driven by input gear hub 13 (i.e., without either the clutch assembly 16 and shifter assembly 18).

The clutch assembly 16 of the power take off 10 includes a drive gear 21 that is rotatably driven by the input gear hub 13. The illustrated drive gear 21 includes an axially-extending hollow cylindrical bell portion 21a having a splined inner surface. The illustrated drive gear 21 is rotatably supported on the output shaft 17 by a bearing 22 and is formed integrally from a single piece of material with the hollow cylindrical bell portion 21a. However, it is known to form the drive gear 21 and the hollow cylindrical bell portion 21a from separate components that are splined or otherwise connected together for concurrent rotation. In either event, a plurality of flat annular clutch plates 23 is splined to the inner splined surface of the hollow cylindrical bell portion 21a of the drive gear 21 for rotation therewith. Thus, the drive gear 21 and the clutch plates 23 are constantly rotatably driven by the input gear 12.

A plurality of annular friction plates 24 is disposed in alternating fashion between the clutch plates 23. The friction plates 24 are splined to an outer splined surface provided on an axially extending cylindrical portion 25a of a clutch gear 25 for rotation therewith. The clutch gear 25 is splined or otherwise secured to the output shaft 17 for rotation therewith. Thus, the friction plates 24, the clutch gear 25, and the output shaft 17 are connected for rotation together as a unit. The clutch gear 25 is restrained from axial movement in one direction (toward the right when viewing Fig. 1) by one or more retaining rings 25b that are mounted on the output shaft 17, for a purpose that will be explained below.

An annular clutch piston 26 is provided for selectively causing the clutch plates 23 and the friction plates 24 to frictionally engage one another so as to engage the clutch assembly 16. To accomplish this, the clutch piston 26 is disposed within a hollow cylindrical clutch cylinder 27. The clutch cylinder 27 has a closed end and an opened end. One end of the clutch piston 26 (the left end when viewing Fig. 1) is disposed within the clutch cylinder 27, while the opposite end of the clutch piston 26 (the right end when viewing Fig. 1) extends from the opened end of the clutch cylinder 27 adjacent to the clutch plates 23 and friction plates 24. Both the clutch piston 26 and the clutch cylinder 27 are supported on the output shaft 17 The clutch piston 26 is axially movable along the output shaft 17, but the clutch cylinder 27 is restrained from axial movement in one direction (toward the left when viewing Fig. 1) by one or more retaining rings 27a that are mounted on the output shaft 17 for a purpose that will be explained below.

A coiled clutch spring 28 reacts between the clutch piston 26 and the clutch gear 25. As discussed above, the clutch gear 25 is restrained from axial movement in one direction (toward the right when viewing Fig. 1) by the retaining ring 25b. Thus, the clutch spring 28 urges the clutch piston 26 axially in the opposite direction (toward the left when viewing Fig. 1) toward a disengaged position adjacent to the closed end of the clutch cylinder 27. In the disengaged position, the clutch piston 26 does not engage the clutch plates 23 or the friction plates 24. Thus, the clutch plates 23 and the friction plates 24 do not frictionally engage one another. As a result, the clutch gear 25 is disconnected from the drive gear 21 so as to provide no rotatable driving connection therebetween.

To engage the clutch assembly 16, the shifter assembly 18 is actuated to supply pressurized fluid to an annular clutch chamber 29 defined between the clutch piston 26 and the closed end of the clutch cylinder 27. As a result, the clutch piston 26 is moved axially in the one direction (toward the right when viewing Fig. 1) toward an engaged position. In the engaged position, the clutch piston 26 causes the clutch plates 23 and the friction plates 24 to frictionally engage one another. As a result, the clutch gear 25 is connected to the drive gear 21 so as to provide a rotatable driving connection therebetween.

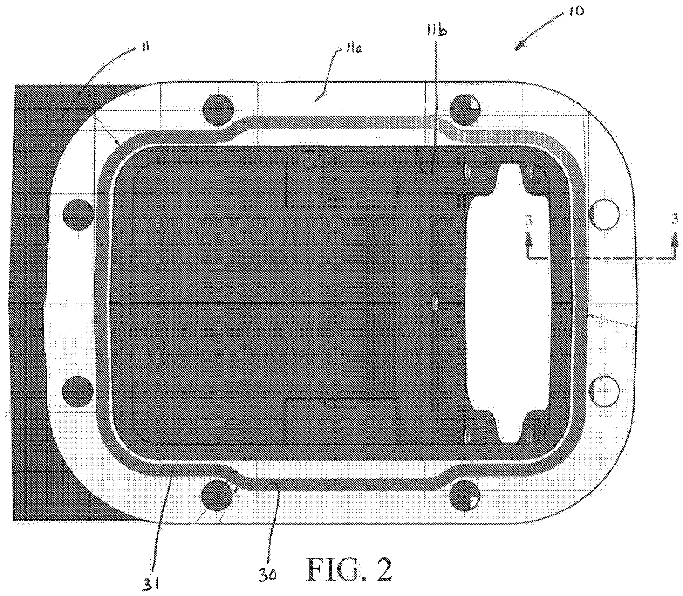

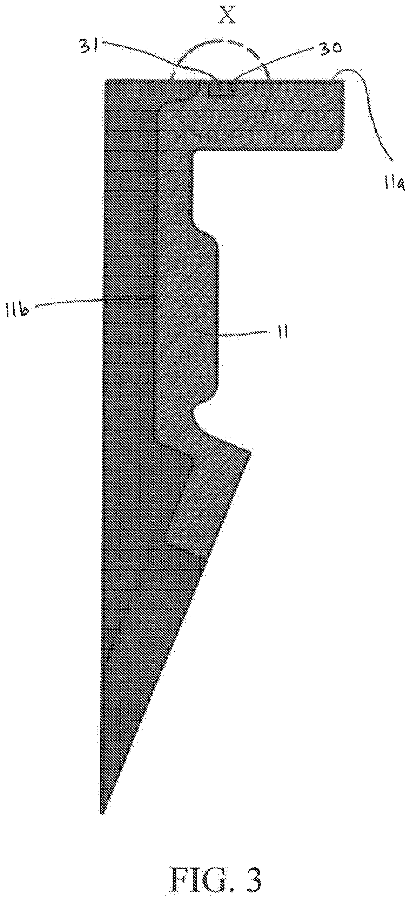

In accordance with this invention, an improved sealing structure is provided between the housing 11 of the power take off 10 and the housing 10a of the source of rotational energy upon which the power take off 10 is supported. As shown in Figs. 2, 3, and 4, this improved sealing structure includes a groove 30 that is milled or otherwise provided in the mounting surface 11a of the housing 11 of the power take off 10. The illustrated groove 30 is generally rectilinear in cross-sectional shape. However, the groove 30 may have any desired cross-sectional shape. As shown in Fig. 2, the illustrated groove 30 extends completely about the perimeter of the opening 11b provided through the mounting surface 11a of the power take off housing 11, and further is disposed closely adjacent to such opening 11b. However, if desired, the groove 30 may extend throughout any portion or combination of portions of the mounting surface 11a of the power take off housing 11.

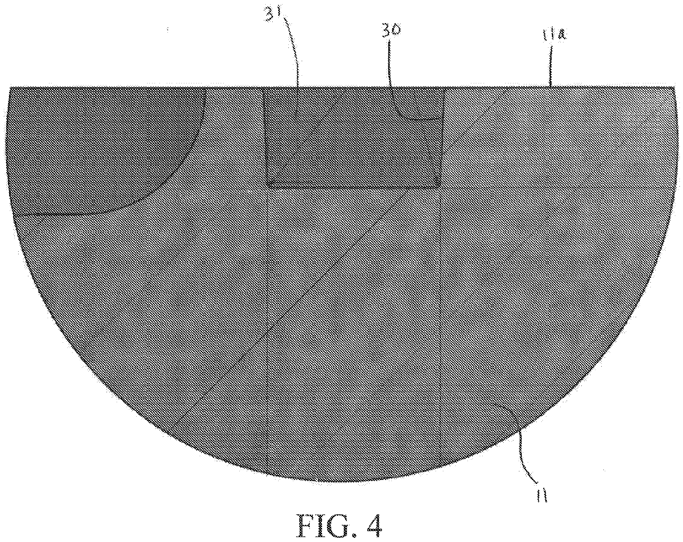

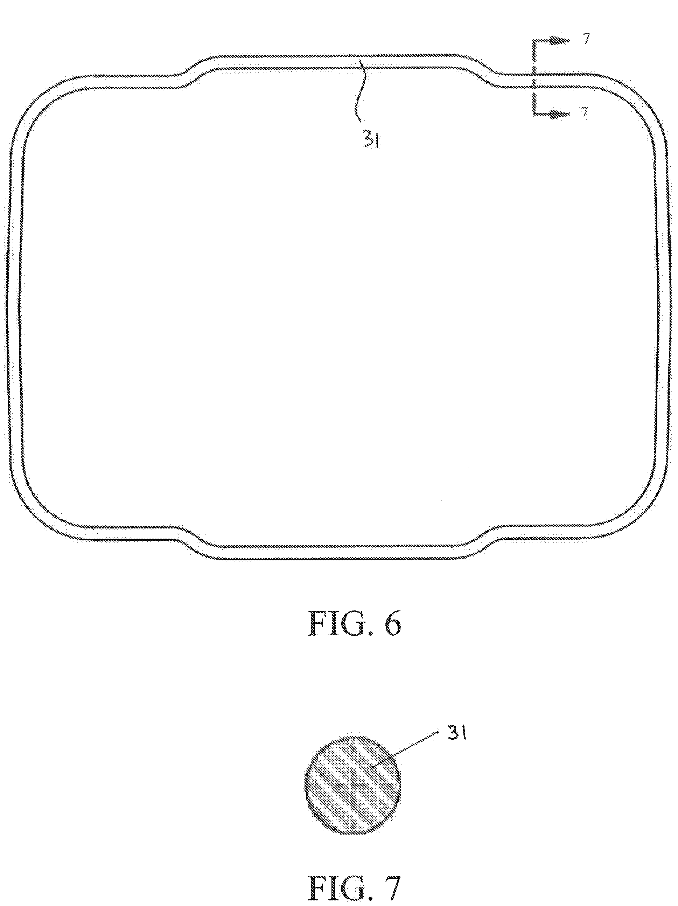

In a first embodiment of this invention, the improved sealing structure of this invention further includes an elastomeric sealing member 31 that is disposed within the groove 30. In the illustrated embodiment, this elastomeric sealing member 31 is an O-ring that is generally circular in cross-sectional shape (see Fig. 7) when it is not compressed between the mounting surface 1 1a of the power take off housing 11 and the corresponding mounting surface of the source of rotational energy 10a. However, the elastomeric sealing member 31 may have any desired cross-sectional shape or combination of cross-sectional shapes. Preferably, the elastomeric sealing member 31 defines a diameter of other dimension that is larger than a depth defined by the groove 30 so that the elastomeric sealing member 31 is compressed within the groove 30 between the mounting surface 11a of the power take off housing 11 and the corresponding mounting surface of the source of rotational energy 10a, as shown in Fig. 4.

Also, the elastomeric sealing member 31 preferably has an overall shape that is generally the same as the overall shape of the groove 11a, which facilitates the quick and easy installation of the elastomeric sealing member 31 within the groove 11a for use, as shown in Figs. 2, 3, and 4. The first embodiment of the elastomeric sealing member 31 may, if desired, be formed to be slightly larger (in whole or in part) in diameter or other dimension than a width defined by the groove 11a such that a frictional fit is established between the elastomeric sealing member 31 and the groove 11a when the elastomeric sealing member 31 is installed within the groove 11a. This can help retain the elastomeric sealing member 31 within the groove 11a during installation of the power take off 10 onto the source of rotational energy 10a. However, the elastomeric sealing member 31 may have any desired overall shape.

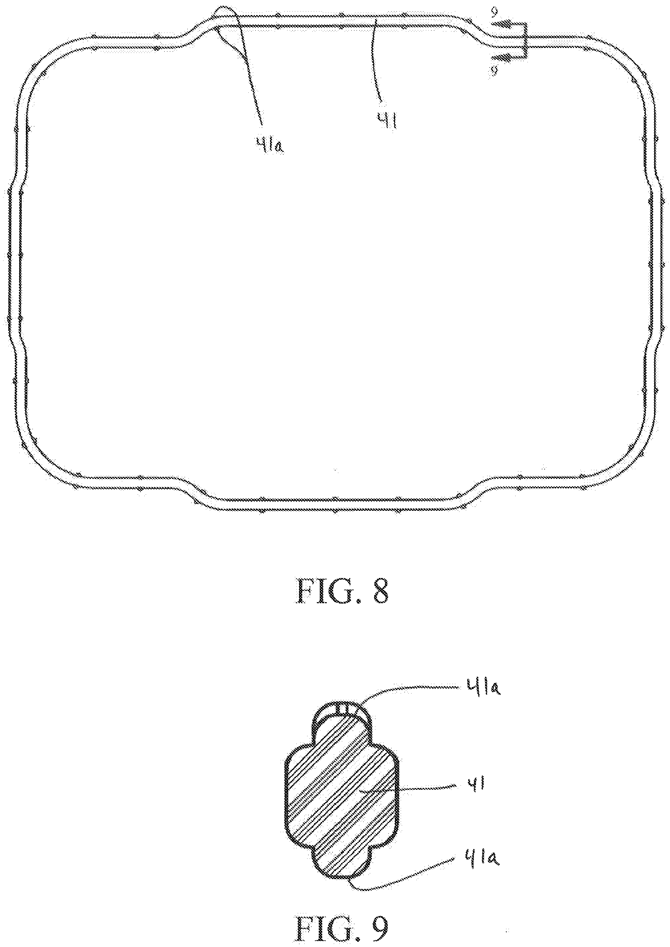

In a second embodiment of this invention shown in Figs. 8 and 9, the improved sealing structure of this invention further includes an alternative elastomeric sealing member 41 that is disposed within the groove 30. In the illustrated embodiment, this alternative elastomeric sealing member 41 is an O-ring that is generally rectangular in cross-sectional shape (see Fig. 9) when it is not compressed between the mounting surface 11a of the power take off housing 11 and the corresponding mounting surface of the source of rotational energy 10a. However, the alternative elastomeric sealing member 41 may have any desired cross-sectional shape or combination of cross-sectional shapes. Preferably, the alternative elastomeric sealing member 41 has an overall shape that is generally the same as the overall shape of the groove 11a, which facilitates the quick and easy installation of the alternative elastomeric sealing member 41 within the groove 11a for use, as shown in Figs. 2, 3, and 4.

The alternative elastomeric sealing member 41 may, if desired, be provided with one or more laterally extending projections 41a that are slightly larger in dimension than the groove 11a such that a frictional fit is established between the alternative elastomeric sealing member 41 and the groove 11a when the alternative elastomeric sealing member 41 is installed within the groove 11a. This can help retain the alternative elastomeric sealing member 41 within the groove 11a during installation of the power take off 10 onto the source of rotational energy 10a. In the illustrated embodiment, a plurality of opposed pairs of such laterally extending projections 41a are provided throughout the alternative elastomeric sealing member 41. However, any number of such laterally extending projections 41a may be provided throughout the alternative elastomeric sealing member 41, and the alternative elastomeric sealing member 41 may have any desired overall shape.

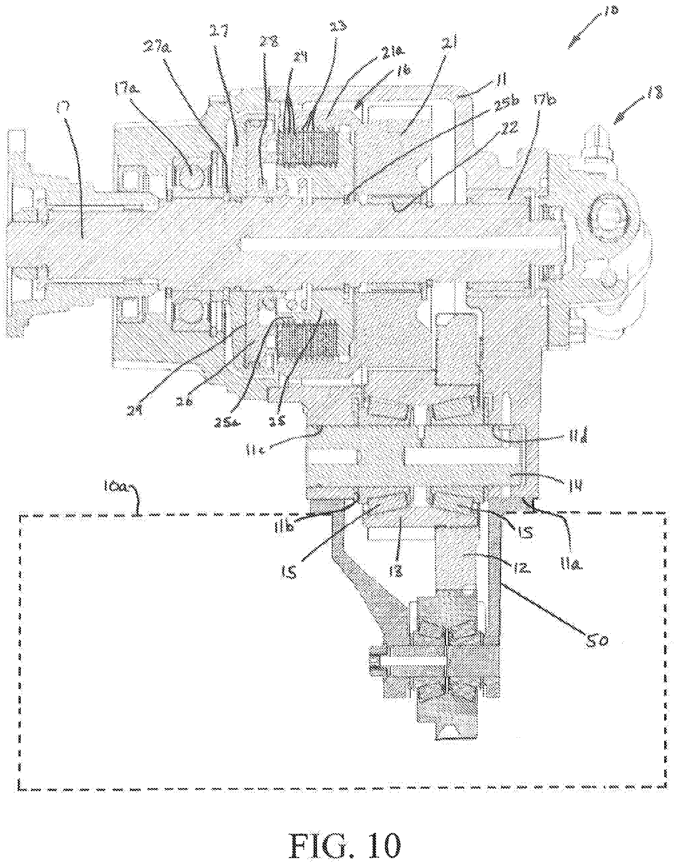

Fig. 10 is a sectional elevational view of an alternative embodiment of this invention wherein the housing 11 of the above-described power take off 10 is supported on a housing of an adaptor 50 that, in turn, is supported on the housing of the source of rotational energy 10a. In this embodiment, the mounting surface 1 la of the power take off housing 11 is adapted to be secured (typically by a plurality of bolts) to a corresponding mounting surface (not shown) provided on the housing of the adaptor 50. Similar to that described above, the elastomeric sealing member 31 or 41 is compressed between the mounting surface 1 la of the power take off housing 11 and the corresponding mounting surface of the adaptor 50.

The principle and mode of operation of this invention have been explained and illustrated in its preferred embodiments. However, it must be understood that this invention may be practiced otherwise than as specifically explained and illustrated without departing from its scope as defined by the claims.

## Claims

1. A power take off (10) adapted to be supported on a mounting surface of a source of rotational energy (10a) so as to provide rotational energy from the source of rotational energy to a rotatably driven accessory, the power take off comprising:
a housing (11) including a mounting surface (11a) adapted to be supported on the mounting surface of the source of rotational energy (10a), the mounting surface (11a) of the housing (11) including an opening (11b) and having a groove (30) therein that extends about the opening (11b);
a sealing member (31; 41) disposed within the groove in the mounting surface (11a) of the housing (11) and adapted to engage the mounting surface of the source of rotational energy when the housing is supported thereon;
an input mechanism (12, 13, 14, 15) supported within the housing and including a portion (12, 13) that extends outwardly through the opening from the housing and is adapted to engage a rotatably driven mechanism provided within the source of rotational energy so as to be rotatably driven by the source of rotational energy; and
an output mechanism (17, 17a, 17b) that is rotatably driven by the input mechanism and is adapted to be connected to a rotatably driven accessory.

2. The power take off (10) defined in Claim 1 wherein the groove (30) is generally rectilinear in cross-sectional shape.

3. The power take off (10) defined in Claim 1 wherein the groove (30) extends about the opening (11b), optionally wherein the groove extends completely about the opening.

4. The power take off (10) defined in Claim 1 wherein the sealing member (31; 41) is an elastomeric sealing member, or wherein the sealing member is an O-ring.

5. The power take off (10) defined in Claim 1 wherein the sealing member (31; 41) is generally circular in cross-sectional shape, or wherein the sealing member is generally rectangular in cross-sectional shape.

6. The power take off (10) defined in Claim 1 wherein the sealing member (31; 41) is larger than the groove (30).

7. The power take off (10) defined in Claim 1 wherein the sealing member (31; 41) is provided with one or more laterally extending projections (41a) that are larger than the groove (30).

8. A combined assembly of a source of rotational energy (10a) and a power take off (10) that is adapted to be connected to a rotatably driven accessory, the assembly comprising:
a source of rotational energy (10a) including a mounting surface and a rotatably driven mechanism; and
a power take off (10) including:
a housing (11) including a mounting surface (11a) supported on the mounting surface of the source of rotational energy, the mounting surface (11a) of the housing (11) including an opening (11b) and having a groove (30) therein that extends about the opening (11b);
a sealing member (31; 41) disposed within the groove in the mounting surface (11a) of the housing (11) and engaging the mounting surface of the source of rotational energy;
an input mechanism (12, 13, 14, 15) supported within the housing (11) and including a portion (12, 13) that extends outwardly through the opening (11b) from the housing (11) and engages the rotatably driven mechanism provided within the source of rotatable energy so as to be rotatably driven by the source of rotational energy; and
an output mechanism (17, 17a, 17b) that is rotatably driven by the input mechanism and is adapted to be connected to a rotatably driven accessory.

9. The combined assembly defined in Claim 8 wherein the groove (30) is generally rectilinear in cross-sectional shape.

10. The combined assembly defined in Claim 8 wherein the groove (30) extends about the opening (11b), optionally wherein the groove extends completely about the opening.

11. The combined assembly defined in Claim 8 wherein the sealing member (31; 41) is an elastomeric sealing member.

12. The combined assembly defined in Claim 8 wherein the housing (11) of the power take off (10) is supported on a housing of an adaptor (50) that, in turn, is supported on the housing of the source of rotational energy, and wherein the sealing member (31; 41) engages the housing of the adaptor.

13. The combined assembly defined in Claim 8 wherein the sealing member (31; 41) is generally circular in cross-sectional shape, or wherein the sealing member is generally rectangular in cross-sectional shape.

14. The combined assembly defined in Claim 8 wherein the sealing member (31; 41) is larger than the groove (30).

15. The combined assembly defined in Claim 8 wherein the sealing member (31; 41) is provided with one or more laterally extending projections (41a) that are larger than the groove (30).

## Patentansprüche

1. Eine Zapfwelle (10), die dazu angepasst ist, auf einer Montagefläche einer Rotationsenergiequelle (10a) gehalten zu werden, um einem rotatorisch angetriebenen Nebenaggregat Rotationsenergie von der Rotationsenergiequelle bereitzustellen, wobei die Zapfwelle Folgendes beinhaltet:
ein Gehäuse (11), das eine Montagefläche (11a) umfasst, die dazu angepasst ist, auf der Montagefläche der Rotationsenergiequelle (10a) gehalten zu werden, wobei die Montagefläche (11a) des Gehäuses (11) eine Öffnung (11b) umfasst und eine Nut (30), die sich um die Öffnung (11b) herum erstreckt, darin aufweist;
ein Dichtelement (31; 41), das innerhalb der Nut in der Montagefläche (11a) des Gehäuses (11) angeordnet ist und dazu angepasst ist, mit der Montagefläche der Rotationsenergiequelle in Eingriff zu sein, wenn das Gehäuse darauf gehalten wird;
einen Eingangsmechanismus (12, 13, 14, 15), der innerhalb des Gehäuses gehalten wird und einen Abschnitt (12, 13) umfasst, der sich von dem Gehäuse durch die Öffnung nach außen erstreckt und dazu angepasst ist, mit einem rotatorisch angetriebenen Mechanismus, der innerhalb der Rotationsenergiequelle bereitgestellt ist, in Eingriff zu sein, um durch die Rotationsenergiequelle rotatorisch angetrieben zu werden; und
einen Ausgangsmechanismus (17, 17a, 17b), der durch den Eingangsmechanismus rotatorisch angetrieben wird und dazu angepasst ist, mit einem rotatorisch angetriebenen Nebenaggregat verbunden zu sein.

2. Zapfwelle (10) gemäß Anspruch 1, wobei die Nut (30) einen im Wesentlichen geradlinigen Querschnitt aufweist.

3. Zapfwelle (10) gemäß Anspruch 1, wobei sich die Nut (30) um die Öffnung (11b) herum erstreckt, wobei sich die Nut optional komplett um die Öffnung herum erstreckt.

4. Zapfwelle (10) gemäß Anspruch 1, wobei das Dichtelement (31; 41) ein Elastomerdichtelement ist oder wobei das Dichtelement ein O-Ring ist.

5. Zapfwelle (10) gemäß Anspruch 1, wobei das Dichtelement (31; 41) einen im Wesentlichen kreisförmigen Querschnitt aufweist oder wobei das Dichtelement einen im Wesentlichen rechteckigen Querschnitt aufweist.

6. Zapfwelle (10) gemäß Anspruch 1, wobei das Dichtelement (31; 41) größer als die Nut (30) ist.

7. Zapfwelle (10) gemäß Anspruch 1, wobei das Dichtelement (31; 41) mit einem oder mehreren sich seitlich erstreckenden Vorsprüngen (41a) bereitgestellt ist, die größer als die Nut (30) sind.

8. Eine zusammengesetzte Anordnung aus einer Rotationsenergiequelle (10a) und einer Zapfwelle (10), die dazu angepasst ist, mit einem rotatorisch angetriebenen Nebenaggregat verbunden zu sein, wobei die Anordnung Folgendes beinhaltet:
eine Rotationsenergiequelle (10a), die eine Montagefläche und einen rotatorisch angetriebenen Mechanismus umfasst; und
eine Zapfwelle (10), die Folgendes umfasst:
ein Gehäuse (11), das eine Montagefläche (11a) umfasst, die auf der Montagefläche der Rotationsenergiequelle gehalten wird, wobei die Montagefläche (11a) des Gehäuses (11) eine Öffnung (11b) umfasst und eine Nut (30), die sich um die Öffnung (11b) herum erstreckt, darin aufweist;
ein Dichtelement (31; 41), das innerhalb der Nut in der Montagefläche (11a) des Gehäuses (11) angeordnet ist und mit der Montagefläche der Rotationsenergiequelle in Eingriff ist;
einen Eingangsmechanismus (12, 13, 14, 15), der innerhalb des Gehäuses (11) gehalten wird und einen Abschnitt (12, 13) umfasst, der sich von dem Gehäuse (11) durch die Öffnung (11b) nach außen erstreckt und mit dem rotatorisch angetriebenen Mechanismus, der innerhalb der Rotationsenergiequelle bereitgestellt ist, in Eingriff ist, um durch die Rotationsenergiequelle rotatorisch angetrieben zu werden; und
einen Ausgangsmechanismus (17, 17a, 17b), der durch den Eingangsmechanismus rotatorisch angetrieben wird und dazu angepasst ist, mit einem rotatorisch angetriebenen Nebenaggregat verbunden zu sein.

9. Zusammengesetzte Anordnung gemäß Anspruch 8, wobei die Nut (30) einen im Wesentlichen geradlinigen Querschnitt aufweist.

10. Zusammengesetzte Anordnung gemäß Anspruch 8, wobei sich die Nut (30) um die Öffnung (11b) herum erstreckt, wobei sich die Nut optional komplett um die Öffnung herum erstreckt.

11. Zusammengesetzte Anordnung gemäß Anspruch 8, wobei das Dichtelement (31; 41) ein Elastomerdichtelement ist.

12. Zusammengesetzte Anordnung gemäß Anspruch 8, wobei das Gehäuse (11) der Zapfwelle (10) auf einem Gehäuse eines Adapters (50) gehalten wird, das wiederum auf dem Gehäuse der Rotationsenergiequelle gehalten wird, und wobei das Dichtelement (31; 41) mit dem Gehäuse des Adapters in Eingriff ist.

13. Zusammengesetzte Anordnung gemäß Anspruch 8, wobei das Dichtelement (31; 41) einen im Wesentlichen kreisförmigen Querschnitt aufweist oder wobei das Dichtelement einen im Wesentlichen rechteckigen Querschnitt aufweist.

14. Zusammengesetzte Anordnung gemäß Anspruch 8, wobei das Dichtelement (31; 41) größer als die Nut (30) ist.

15. Zusammengesetzte Anordnung gemäß Anspruch 8, wobei das Dichtelement (31; 41) mit einem oder mehreren sich seitlich erstreckenden Vorsprüngen (41a) bereitgestellt ist, die größer als die Nut (30) sind.

## Revendications

1. Une prise de force (10) conçue pour être en appui sur une surface de fixation d'une source d'énergie de rotation (10a) de sorte à apporter une énergie de rotation en provenance de la source d'énergie de rotation à un accessoire entraîné en rotation, la prise de force comprenant :
un boîtier (11) incluant une surface de fixation (11a) conçu pour être en appui sur la surface de fixation de la source d'énergie de rotation (10a), la surface de fixation (11a) du boîtier (11) incluant une ouverture (11b) et présentant une rainure (30) dans celle-ci qui se prolonge autour de l'ouverture (11b) ;
un élément d'étanchéification (31 ; 41) disposé à l'intérieur de la rainure dans la surface de fixation (11a) du boîtier (11) et conçu pour se mettre en prise avec la surface de fixation de la source d'énergie de rotation lorsque le boîtier est en appui sur celle-ci ;
un mécanisme d'entrée (12, 13, 14, 15) en appui à l'intérieur du boîtier et incluant une portion (12, 13) qui se prolonge vers l'extérieur à travers l'ouverture depuis le boîtier et est conçue pour se mettre en prise avec un mécanisme entraîné en rotation prévu à l'intérieur de la source d'énergie de rotation de sorte à être entraîné en rotation par la source d'énergie de rotation ; et
un mécanisme de sortie (17, 17a, 17b) qui est entraîné en rotation par le mécanisme d'entrée et est conçu pour être raccordé à un accessoire entraîné en rotation.

2. La prise de force (10) définie dans la revendication 1 où la rainure (30) est de forme généralement rectiligne en coupe transversale.

3. La prise de force (10) définie dans la revendication 1 où la rainure (30) se prolonge autour de l'ouverture (11b), facultativement où la rainure se prolonge entièrement autour de l'ouverture.

4. La prise de force (10) définie dans la revendication 1 où l'élément d'étanchéification (31 ; 41) est un élément d'étanchéification élastomère, ou bien où l'élément d'étanchéification est un joint torique.

5. La prise de force (10) définie dans la revendication 1 où l'élément d'étanchéification (31 ; 41) est de forme généralement circulaire en coupe transversale, ou bien où l'élément d'étanchéification est de forme généralement rectangulaire en coupe transversale.

6. La prise de force (10) définie dans la revendication 1 où l'élément d'étanchéification (31 ; 41) est plus grand que la rainure (30).

7. La prise de force (10) définie dans la revendication 1 où l'élément d'étanchéification (31 ; 41) est pourvu d'une ou de plusieurs saillies (41a) se prolongeant latéralement qui sont plus grandes que la rainure (30).

8. Un assemblage combiné d'une source d'énergie de rotation (10a) et d'une prise de force (10) qui est conçue pour être raccordée à un accessoire entraîné en rotation, l'assemblage comprenant :
une source d'énergie de rotation (10a) incluant une surface de fixation et un mécanisme entraîné en rotation ; et
une prise de force (10) incluant :
un boîtier (11) incluant une surface de fixation (11a) en appui sur la surface de fixation de la source d'énergie de rotation, la surface de fixation (11a) du boîtier (11) incluant une ouverture (11b) et présentant une rainure (30) dans celle-ci qui se prolonge autour de l'ouverture (11b) ;
un élément d'étanchéification (31 ; 41) disposé à l'intérieur de la rainure dans la surface de fixation (11a) du boîtier (11) et se mettant en prise avec la surface de fixation de la source d'énergie de rotation ;
un mécanisme d'entrée (12, 13, 14, 15) en appui à l'intérieur du boîtier (11) et incluant une portion (12, 13) qui se prolonge vers l'extérieur à travers l'ouverture (11b) depuis le boîtier (11) et se met en prise avec le mécanisme entraîné en rotation prévu à l'intérieur de la source d'énergie rotative de sorte à être entraîné en rotation par la source d'énergie de rotation ; et
un mécanisme de sortie (17, 17a, 17b) qui est entraîné en rotation par le mécanisme d'entrée et est conçu pour être raccordé à un accessoire entraîné en rotation.

9. L'assemblage combiné défini dans la revendication 8 où la rainure (30) est de forme généralement rectiligne en coupe transversale.

10. L'assemblage combiné défini dans la revendication 8 où la rainure (30) se prolonge autour de l'ouverture (11b), facultativement où la rainure se prolonge entièrement autour de l'ouverture.

11. L'assemblage combiné défini dans la revendication 8 où l'élément d'étanchéification (31 ; 41) est un élément d'étanchéification élastomère.

12. L'assemblage combiné défini dans la revendication 8 où le boîtier (11) de la prise de force (10) est en appui sur un boîtier d'un adaptateur (50) qui, à son tour, est en appui sur le boîtier de la source d'énergie de rotation, et où l'élément d'étanchéification (31 ; 41) se met en prise avec le boîtier de l'adaptateur.

13. L'assemblage combiné défini dans la revendication 8 où l'élément d'étanchéification (31 ; 41) est de forme généralement circulaire en coupe transversale, ou bien où l'élément d'étanchéification est de forme généralement rectangulaire en coupe transversale.

14. L'assemblage combiné défini dans la revendication 8 où l'élément d'étanchéification (31 ; 41) est plus grand que la rainure (30).

15. L'assemblage combiné défini dans la revendication 8 où l'élément d'étanchéification (31 ; 41) est pourvu d'une ou de plusieurs saillies (41a) se prolongeant latéralement qui sont plus grandes que la rainure (30).
